# EUROPÄISCHE PATENTSCHRIFT

(11) **EP 2 042 259 B1**
(45) Veröffentlichungstag und Bekanntmachung des Hinweises auf die Patenterteilung: **06.04.2011**
(21) Anmeldenummer: 08162949.5
(22) Anmeldetag: 26.08.2008
(51) Int. Cl.: B23K 26/08, B23K 26/04

(54) **Vorrichtung und Verfahren zum Laser-Schneiden**
Device and method for laser cutting
Dispositif et procédé de coupe au laser

(30) Priorität: 27.09.2007 DE 102007046142
(43) Veröffentlichungstag der Anmeldung: 01.04.2009
(73) Patentinhaber: Deere & Company, Moline, IL 61265-8098 (US)
(72) Erfinder: Moritz, Michael, 76646 Bruchsal (DE); Metzger, Thomas, 68775 Ketsch (DE)
(74) Vertreter: Holst, Sönke

(56) Entgegenhaltungen:
- DE-A1- 3 445 981
- US-A- 5 067 086

## Beschreibung

Die Erfindung betrifft eine Vorrichtung zum Laser-Schneiden eines Werkstücks, mit einem elektronisch steuerbaren ersten Roboter zum Heranführen eines Laser-Schneidkopfes an vorgebbare Referenzpositionen in Bezug zu einem Werkstück, einer mit einem Speicher versehenen, programmierbaren Steuereinrichtung zur Steuerung des ersten Roboters in Bezug auf im Speicher hinterlegte Referenzpositionskoordinaten und einer Abstandskorrektureinrichtung zur Abstandskorrektur des Laser-Schneidkopfes zum Werkstück nach einer Heranführung des Laser-Schneidkopfes an die durch die Referenzpositionskoordinaten definierte Referenzposition. Ferner betrifft die Erfindung ein entsprechendes Verfahren.

Vorrichtungen zum Laser-Schneiden werden unter anderem zum Bearbeiten von Werkstücken, insbesondere zum Einbringen von Einschnitten oder Aussparungen in das Werkstück eingesetzt und sind im Stand der Technik bekannt.

Eine derartige Vorrichtung und ein dazugehöriges Verfahren wird beispielsweise in der DE 37 00 829 A1 offenbart. Sie betrifft insbesondere eine Vorrichtung und ein Verfahren für Laserstrahl-Arbeiten wie Schneiden, Schweißen und dergleichen, um mit einem Laserstrahl mehrere Metallschneidvorgänge auf einer Montagelinie durchzuführen. Die Vorrichtung weist ein relativ aufwändiges Sensorverfahren auf, um die Position des Laserstrahlkopfes bzw. der Schneiddüse zu steuern.

Die DE 34 45 981 A1 offenbart eine Vorrichtung und ein Verfahren zum Bearbeiten von Werkstücken mit einem aus einem Laserkopf austretenden Laserstrahl, wobei die Vorrichtung eine Höhenabtasteinrichtung aufweist, die zur Regelung bzw. Kontrolle eines fokusgerechten Abstands des Laserkopfes zum Werkstück eingesetzt wird. Dabei wird die Höhenabtasteinrichtung direkt mit einer NC-Steuerung verbunden, wobei der Abstand zwischen Werkstück und der Laserkopf gemäß eines von der Höhenabtasteinrichtung an die NC-Steuerung gelieferten Höhenkorrektursignals korrigiert wird. Nachteilig wirkt sich aus, dass die Korrektureinrichtung sowohl Werkstückseitig als auch Laserkopfseitig erfolgt und somit eine relativ komplexe Steuerung eingesetzt wird, um einen gewissen Qualitätsstandard bei der Werkstückbearbeitung zu gewährleisten.

Eine weitere Vorrichtung bzw. ein dazugehöriges Verfahren zur Laserbearbeitung von Werkstücken wird in der DE 199 63 010 B4 offenbart. Hierbei wird eine Scannerspiegelreflexionseinrichtung mit einem optischen Detektor gekoppelt und ein Korrektursignal generiert, in Abhängigkeit dessen eine Korrekturauslenkung des Laserstrahls erfolgt, ohne eine Relativbewegung zwischen Laserstrahlkopf und Werkstück vornehmen zu müssen. Diese Korrektureinrichtung erweist sich als sehr aufwändig und komplex.

Ferner offenbart die DE 10 2004 043 076 A1 ein Verfahren zum Überwachen eines Laserstrahlbearbeitungsvorgangs, wobei ein an einem Roboterarm befestigter Laserkopf relativ zu einem zu bearbeitenden Werkstück positioniert wird. Beim Bearbeiten wird die Oberfläche des Werkstücks mit einer Ablenkvorrichtung und einer Fokussiervorrichtung für einen Laserstrahl in einer Bearbeitungszone abgetastet, wobei über eine Kamera die Oberfläche des Werkstücks und der Auftreffpunkt des Laserstrahls überwacht und entsprechende Ist-Signale gewonnen werden. Bei einer entsprechenden Abweichung zu vorgegebenen Soll-Werten werden Korrekturstellsignale generiert die entsprechenden Stellelementen des Roboterarms und/oder der Ablenkvorrichtung und/oder der Fokussiervorrichtung zugeführt werden. Nachteilig wirkt sich aus, dass auch hier die eingesetzte Sensortechnik zur Generierung von Korrektursignalen relativ aufwändig und komplex ist.

Die der Erfindung zugrunde liegende Aufgabe wird darin gesehen, eine Vorrichtung und ein Verfahren vorzugeben, durch welche bzw. durch welches zur Sicherung eines vorgegebenen Qualitätsstandards beim Laser-Schneiden bestimmte Toleranzen am Werkstück eingehalten werden ohne zusätzliche, aufwändige und komplexe Sensor- und/oder Korrektursysteme einzusetzen.

Die Aufgabe wird erfindungsgemäß durch die Lehre des Patentanspruchs 1 und 4 gelöst. Weitere vorteilhafte Ausgestaltungen und Weiterbildungen der Erfindung gehen aus den Unteransprüchen hervor.

Erfindungsgemäß wird eine Vorrichtung der eingangs genannten Art mit einer elektronischen Steuereinheit versehen, die derart ausgebildet und programmiert ist, dass ein Vergleich der von der Steuereinheit erfassten Positionskoordinaten nach erfolgter Abstandskorrektur des Laser-Schneidkopfes mit den im Speicher hinterlegten Referenzpositionskoordinaten erfolgt, bevor ein Laser-Schneidprozess eingeleitet wird. Der Vorteil dabei ist, dass auf zusätzliche Sensor- und Korrektureinrichtung verzichtet werden kann und die ohnehin vorhandene Steuereinheit für den ersten Roboter zur Erfassung der Positionskoordinaten nach erfolgter Abstandskorrektur herangezogen wird, indem die Positionsdaten erfasst bzw. ausgelesen und mit den Referenzdaten verglichen werden.

In einer bevorzugten Ausführungsform ist die Steuereinheit derart ausgebildet und programmiert, dass nach dem Vergleich ein Abbruchsteuersignal generiert wird, das den Schneidprozess abbricht, wenn die Differenz zwischen wenigstens einer abgespeicherten Referenzpositionskoordinate und der entsprechend erfassten Positionskoordinate einen vorgebbaren Toleranzwert übersteigt. Dadurch, dass ein Abbruchsignal generiert wird, erspart man sich zum einen eine zeitraubende Laser-Schneidbearbeitung eines außerhalb der Toleranz von Referenzwerten liegenden Werkstücks, welches einer anschließenden Qualitätskontrolle nicht standgehalten hätte und zum anderen erhöht man die Produktqualität dahingehend, dass nur Werkstücke mit passabler Toleranz einer Laser-Schneidbearbeitung unterzogen werden.

In einer weiteren bevorzugten Ausführungsform ist ein zweiter Roboter zur Positionierung des Werkstücks vorgesehen, durch welche das Werkstück gegriffen und in wenigstens eine Bearbeitungsposition zum Laser-Schneiden befördert wird, wobei der zweite Roboter derart ausgebildet ist, dass bei einer Beendigung oder dem Abbruch des Laser-Schneidprozesses das Werkstück aus der Bearbeitungsposition in eine weitere Position befördert wird. Dadurch wird gewährleistet, dass bei einer Nichteinhaltung der Toleranz zwischen wenigstens einer abgespeicherten Referenzpositionskoordinate und der entsprechend erfassten Positionskoordinate das fehlerhafte Werkstück durch den zweiten Roboter aus einer Laser-Schneid Bearbeitungsposition herausbefördert werden kann, so dass im Laser-Schneidprozess ohne wesentliche Unterbrechung ein neues Werkstück bearbeiten kann. Dabei kann das fehlerhafte Werkstück (Ausschussteil), welches die Toleranzschwelle übersteigt, an einen Platz für Ausschussteile befördert werden, welche dann einer Nachbearbeitung oder einer Entsorgung zugeführt werden können. Nachdem das fehlerhafte Werkstück an diesen Platz befördert wurde, erfolgt sogleich die Positionierung eines neuen Werkstücks durch den zweiten Roboter.

Ein entsprechendes erfindungsgemäßes Verfahren zum Laser-Schneiden eines Werkstücks umfasst die Verfahrensschritte, dass ein Laser-Schneidkopf von einem über eine elektronische Steuereinheit steuerbaren ersten Roboter an eine vorgebbare Referenzposition in Bezug zu einem Werkstück herangeführt und nach Heranführen des Laser-Schneidkopfes an die vorgegebene Referenzposition mittels einer vorzugsweise durch die Steuereinheit gesteuerten Abstandskorrektureinrichtung eine Abstandskorrektur des Laser-Schneidkopfes zum Werkstück durchgeführt wird, wobei die Steuereinheit die Positionskoordinaten nach erfolgter Abstandskorrektur des Laser-Schneidkopfes erfasst und mit den vorgegebenen Referenzpositionskoordinaten vergleicht. Es wird also direkt die robotische Steuereinrichtung einer Laser-Schneidvorrichtung eingesetzt, um gezielt festzustellen, ob ein Ausschussteil vorliegt, ohne zusätzliche, der Laser-Schneidbearbeitung vorgeschaltete Messverfahren einzusetzen, so dass verhindert werden kann, dass überflüssige Laser-Schneidvorgänge an einem fehlerhaften Werkstück vorgenommen werden und gleichzeitig durch Erfassung und Selektierung der Ausschussteile die Qualität des gesamten Bearbeitungsprozesses bzw. des gesamten Endprodukts effektiv erhöht werden kann, ohne zusätzliche Maßnahmen in Form von aufwändigen, zusätzlichen Messsystemen treffen zu müssen.

In einer bevorzugten Ausgestaltung der Erfindung wird nach dem Vergleichen ein Abbruchsteuersignal generiert, das den Schneidprozess abbricht, wenn die Differenz zwischen wenigstens einer abgespeicherten Referenzpositionskoordinate und der entsprechend erfassten Positionskoordinate einen vorgebbaren Toleranzwert übersteigt. Wie zuvor erwähnt, wird dadurch erreicht, dass das Laser-Schneidverfahren gezielt abgebrochen werden kann, sobald feststeht, dass es sich um ein Ausschussteil handelt.

In einer weiteren Ausführungsform kann das Werkstück für den Laser-Schneidprozess von einem zweiten Roboter gegriffen und in wenigstens eine Bearbeitungsposition zum Laser-Schneiden befördert und bei einer Beendigung oder dem Abbruch des Laser-Schneidprozesses aus der Bearbeitungsposition in eine weitere Position befördert werden.

Vorzugsweise wird das Werkstück nach Beendigung des Laser-Schneidens in eine andere Position befördert, als in die Position, die mit einem Abbruch des Laser-Schneidens verbunden ist. Die mit einem Abbruch verbundene Position ist beispielsweise eine Ausschussposition, in die das Werkstück gebracht wird, wenn es den Toleranzanforderungen nicht genügt. Entsprechende Prozesse zur Korrektur oder zur Entsorgung des Werkstücks können dann ausgehend von dieser Position erfolgen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Ansicht einer erfindungsgemäßen Vorrichtung zum Laser-Schneiden und
- Fig. 2: ein Blockschaltbild bezüglich eines erfindungsgemäßen Verfahrens zum Laser-Schneiden.

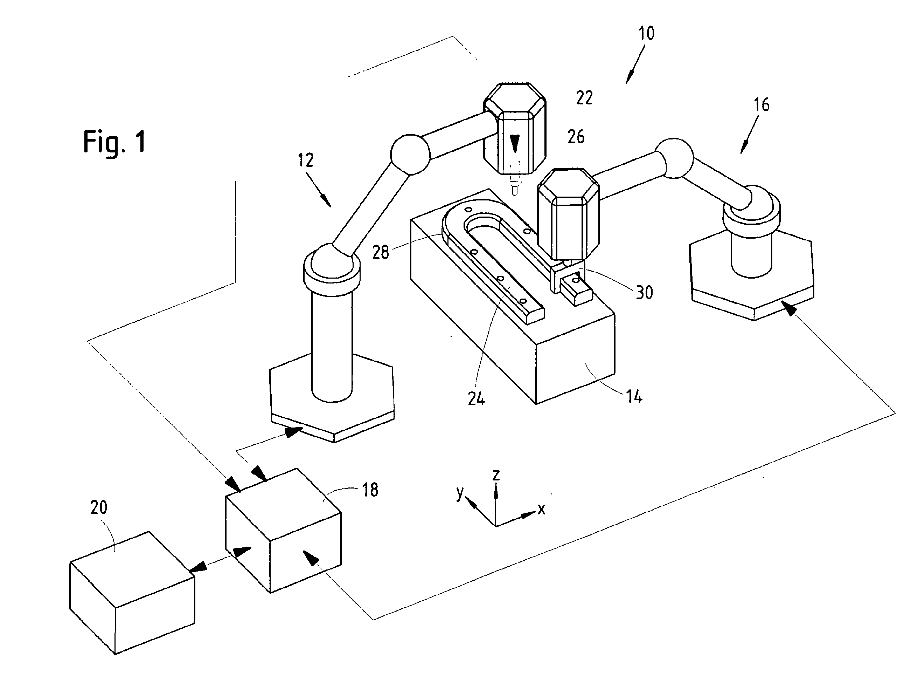

Figur 1 zeigt eine elektronisch gesteuerte Vorrichtung 10 zum Laserstrahl-Schneiden. Die Vorrichtung 10 umfasst einen ersten elektronisch gesteuerten Roboter oder Manipulator 12, einen Werkzeugtisch 14, einen zweiten elektronisch gesteuerten Roboter oder Manipulator 16, eine elektronische, vorzugsweise programmierbare Steuereinheit 18, sowie ein Dateneingabe- und Datenausgabesystem bzw. Dateneinlese- und Datenauslesesystem 20.

Die erste Roboter 12 ist mit einem Laser-Schneidkopf 22 versehen und ist derart ausgebildet, dass er diesen räumlich, also wenigstens in drei Freiheitsgraden (x, y, z) bewegen bzw. positionieren kann. Der Roboter 12 ist vorzugsweise derart ausgebildet, dass er in Bezug auf ein auf dem Werkzeugtisch 14 positioniertes Werkstück 24 den Laser-Schneidkopf 22 entlang der Oberfläche des Werkstücks 24 bzw. in Bezug auf festgelegte Referenzpunkte am Werkstück verfahren bzw. positionieren kann. Der Roboter 12 wird über die elektronische Steuereinheit 18 angesteuert, wobei die elektronische Steuereinheit 18 Steuersignale an eine Robotersteuerung (nicht gezeigt) sendet, welche wiederum den Roboter 12 entsprechend der ausgesendeten Steuersignale bzw. den am Roboter 12 befestigten Laser-Schneidkopf 22 bewegt.

Der Laser-Schneidkopf 22 ist mit einem Lasergerät (nicht gezeigt) verbunden, welches zur Laserbearbeitung von Karosseriebauteilen oder Rahmenbauteilen, insbesondere aus Metall, geeignet ist. Der Laser-Schneidkopf 22 verfügt über eine automatische Abstandkorrektureinrichtung 26, die eingesetzt wird, um eine Feinjustierung des Laser-Schneidkopfs 22 nach einem Positionswechsel bzw. eine korrigierende Positionierung des Laser-Schneidkopfes 22 durchzuführen. Dadurch kann der Laser-Schneidkopf 22 in einen endgültigen für den Laser-Schneidprozess geeigneten Abstand zum Werkstück 24 gebracht werden, so dass eine entsprechende Fokussierung des Lasers auf die zu bearbeitende Oberfläche automatisch erfolgt. Diese Abstandskorrektur ist notwendig, da jedes Werkstück 24 mit gewissen baulichen bzw. geometrischen Toleranzmaßen behaftet ist, die eine für den Laser-Schneidkopf 22 zugelassene Abstandstoleranz übersteigen können, so dass für einen jeden Bearbeitungspunkt am Werkstück 24 eine Feinjustierung des Laser-Schneidkopfes 22 bzw. eine Fokussierung des Laserstrahls erfolgt. Diese Abstandskorrektur erfolgt vorzugsweise kapazitiv durch im Stand der Technik bekannte automatisierte kapazitive Abstandsmessverfahren. Sie kann aber auch mittels optischer oder magnetinduktiver Verfahren erfolgen.

Der Werkzeugtisch 14 ist mit einer Werkstückaufnahme 28 versehen, in die das Werkstück 24 über den zweiten Roboter 16 eingepasst wird. Bei einem Wechsel von einem Werkstück 24 zu einem anderen baugleichen Werkstück 24 wird durch die Werkstückaufnahme 28 gewährleistet, dass die zu bearbeitenden Werkstücke 24 in eine exakt gleiche Bearbeitungsposition gebracht werden. Die exakte Bearbeitungsposition für das Werkstück 24 wird der Steuereinheit 18 durch das Dateneinlesesystem in Bezug auf ein räumlich festgelegtes Koordinatensystem (x,y,z) vorgegeben. Dementsprechend wird auch der zweite Roboter 16 über die elektronische Steuereinheit 18 angesteuert, wobei die elektronische Steuereinheit 18 Steuersignale an eine Robotersteuerung (nicht gezeigt) sendet, welche wiederum den Roboter 16 entsprechend der ausgesendeten Steuersignale bzw. das vom Roboter 16 positionierte Werkstück 24 bewegt. Dazu ist der Roboter 16 beispielsweise mit einer ebenfalls von der Steuereinheit 18 gesteuerten Greifeinrichtung 30 versehen, mit der das Werkstück 24 gegriffen und positioniert werden kann.

Die genannten Robotersteuerungen (nicht gezeigt) die von der elektronischen Steuereinheit angesteuert werden können beispielsweise als pneumatische, hydraulische oder elektrische Stellmotoren ausgebildet sein, wobei für jeden Freiheitsgrad (x,y,z) an jedem Roboter 12, 16 wenigstens einer dieser Stellmotoren vorgesehen ist.

Die elektronische Steuereinheit 18 ist, wie schon erwähnt, mit dem ersten und dem zweiten Roboter 12, 16 verbunden. Ferner ist sie mit der Abstandskorrektureinrichtung 26 des Laser-Schneidkopfes 22 verbunden und empfängt von dieser entsprechende Positionskorrektursignale, nachdem eine Positionierung des Laser-Schneidkopfes 22 an einen Bearbeitungspunkt am Werkstück 24 erfolgte. Die elektronische Steuereinheit 18 ist derart ausgebildet, dass sie zum einen die Roboter 12, 16 ansteuert bzw. gemäß der generierten Steuersignale in Verbindung mit den entsprechenden Robotersteuerungen in Bewegung setzt, und zum anderen durch die Robotersteuerungen generierte Signale empfängt, die eine Position des Laser-Schneidkopfes 22 exakt wiedergeben. So ist es also möglich, dass die Steuereinheit 18 durch über das Dateneingabesystem 20 vorgebbare Positionierungskoordinaten sowohl eine Positionierung des oder der Roboter 12, 16 vornehmen kann als auch Positionierungskoordinaten auslesen bzw. abfragen kann. Die elektronische Steuereinheit 18 verfügt vorzugsweise über einen programmierbaren Speicher, indem z.B. Referenzdaten bezüglich Positionskoordinaten für den Laser-Schneidkopf 22 des ersten Roboters 12 oder auch Positionskoordinaten für den Greifer 30 des zweiten Roboters hinterlegt sind. Ferner ist die Steuereinheit 18 mit einem Prozessor (nicht gezeigt) versehen, der programmierbare Rechenalgorithmen ausführen kann.

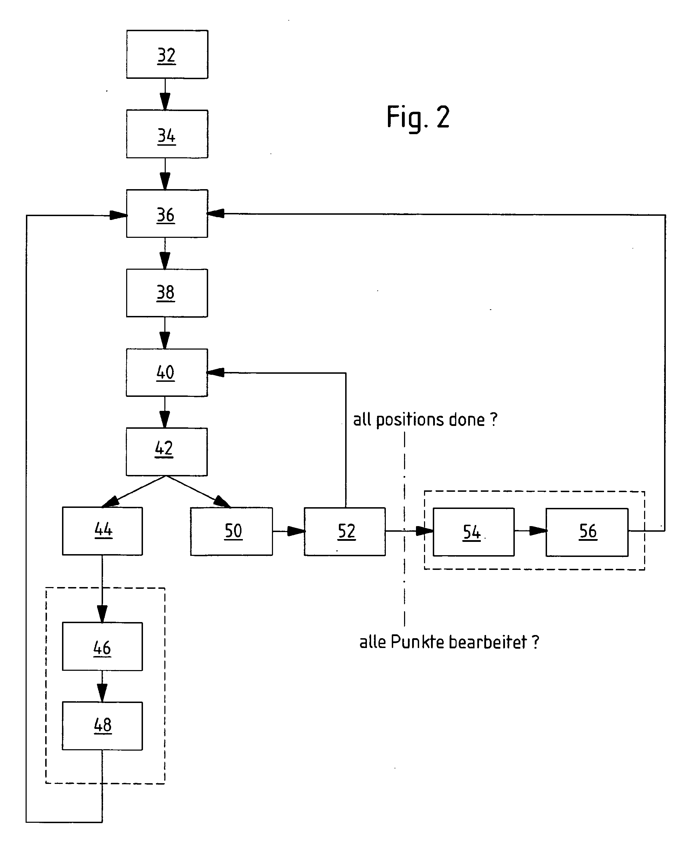

Das Verfahren zu der oben beschriebenen Vorrichtung 10 ist in Figur 2 in Form eines Blockschaltbildes dargestellt und sieht folgende Verfahrensschritte vor:

32: Zur Ermittlung von Referenzdaten wird zunächst ein Werkstück 24, welches in einem Umformprozess, beispielsweise durch Biegen, in eine vorgegebene Form gebracht wurde, von einer nicht gezeigten Vermessungseinrichtung vermessen, um zu gewährleisten, dass dieses Werkstück 24 den erforderlichen Toleranzanforderungen entspricht. Dieses Werkstück dient als Referenzwerkstück, an dem entsprechende Referenzpositionskoordinaten in Bezug auf ein räumlich festgelegtes Koordinatensystem (x,y,z) festgelegt werden. Der Werkzeugtisch 14 ist dabei in Bezug auf das Koordinatensystem (x,y,z) festgelegt. Der dem Umformprozess folgende Laser-Schneidprozess sieht die Bearbeitung an vorgegebenen Bearbeitungspunkten am Werkstück 24 vor. Entsprechend dieser vorgegebenen Bearbeitungspunkte werden die Referenzpositionskoordinaten für die Positionierung des Laser-Schneidkopfes 22 festgelegt. Ferner werden Referenzpositionskoordinaten für die Positionierung der zu bearbeitenden Werkstücke 24 bzw. für die das Werkstück greifende Greifeinrichtung 30 festgelegt.

34: Die Referenzpositionskoordinaten werden der elektronischen Steuereinheit 18 zugeführt.

36: Die elektronische Steuereinheit 18 steuert den zweiten Roboter 16 entsprechend der Referenzpositionskoordinaten derart, dass dieser durch die Greifeinrichtung 30 ein zu bearbeitendes Werkstück 24 greift und aus einer ersten Position (z.B. Vorratsposition) in eine zweite Position, nämlich in die durch die Referenzpositionskoordinaten festgelegte Bearbeitungsposition, auf den Werkzeugtisch 14 befördert.

38: Die elektronische Steuereinheit 18 steuert den ersten Roboter 12 entsprechend der Referenzpositionskoordinaten für die Bearbeitungspunkte derart, dass der Laser-Schneidkopf 22 an den ersten Bearbeitungspunkt am Werkstück 24 positioniert wird.

40: Die elektronische Steuereinheit 18 führt die erforderliche Abstandkorrektur durch Ansteuerung des ersten Roboters 12 in Abhängigkeit von den von der Abstandskorrektureinrichtung 26 gelieferten Abstandswerten durch.

42: Nach erfolgter Abstandskorrektur erfasst die elektronische Steuereinheit 18 die aktuellen Positionskoordinaten des ersten Roboters 12 bzw. des Laser-Schneidkopfes 22 und vergleicht diese mit den Referenzpositionskoordinaten, beispielsweise durch Differenzwertbildung.

44: Sollte ein ermittelter Differenzwert einen vorgegebenen Toleranzwert oder Schwellwert, welcher beispielsweise im Speicher der elektronischen Steuereinheit 18 hinterlegt oder im Steueralgorithmus definiert ist, übersteigen, dann wird von der elektronischen Steuereinheit 18 ein Abbruchsignal generiert.

46: Nach erfolgtem Abbruchsignal wird kein Laser-Schneidprozess gestartet und der erste Roboter 12 wird von der elektronischen Steuereinheit 18 angesteuert und der Laser-Schneidkopf in eine vorprogrammierte Warteposition positioniert.

48: Gleichzeitig oder darauffolgend (daher gestrichelt in Figur 2 umrahmt) wird der zweite Roboter 16 von der elektronischen Steuereinheit 18 derart angesteuert, dass dieser das Werkstück 24 aus der Bearbeitungsposition auf dem Werkzeugtisch 14 in eine andere Position befördert, z.B. in eine Ausschussteilposition in der das Werkstück 24 korrigierend bearbeitet werden kann oder der Entsorgung zugeführt wird. Anschließend wird das Verfahren zum Laser-Schneiden mit Verfahrensschritt 36 fortgeführt.

50: Sollte jedoch der in Verfahrensschritt 42 ermittelte Differenzwert innerhalb der Toleranz liegen, dann wird der Laser-Schneidprozess an diesem Bearbeitungspunkt des Werkstücks 24 gestartet.

52: Nach erfolgtem Laser-Schneiden wird der erste Roboter 12 durch die elektronische Steuereinheit 18 angesteuert und der Laser-Schneidkopf 22 entsprechend der vorgegebenen Referenzpositionskoordinaten zum nächsten Bearbeitungspunkt am Werkstück 24 gefahren bzw. dort positioniert. Anschließend wird das Verfahren zum Laser-Schneiden mit Verfahrensschritt 40 fortgeführt.

54: Nachdem alle vorgesehenen (entsprechend der Referenzpositionskoordinaten) Bearbeitungspunkte an dem Werkstück 24 durch Laser-Schneiden bearbeitet wurden, wird der erste Roboter 12 von der elektronischen Steuereinheit 18 angesteuert und der Laser-Schneidkopf 22 in eine vorprogrammierte Warteposition positioniert.

56: Gleichzeitig oder darauffolgend (daher gestrichelt in Figur 2 umrahmt) wird der zweite Roboter 16 von der elektronischen Steuereinheit 18 derart angesteuert, dass dieser das Werkstück 24 aus der Bearbeitungsposition auf dem Werkzeugtisch 14 in eine andere Position befördert, z.B. in eine Weiterbearbeitungsposition in der das Werkstück 24 zur weiteren Bearbeitung positioniert wird. Anschließend wird das Verfahren zum Laser-Schneiden mit Verfahrensschritt 36 fortgeführt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Vorrichtung (10) zum Laser-Schneiden eines Werkstücks (24), mit einem elektronisch steuerbaren ersten Roboter (12) zum Heranführen eines Laser-Schneidkopfes (22) an vorgebbare Referenzpositionen in Bezug zu einem Werkstück (24), einer mit einem Speicher versehenen, programmierbaren Steuereinheit (18) zur Steuerung des ersten Roboters (12) in Bezug auf im Speicher hinterlegte Referenzpositionskoordinaten und einer Abstandskorrektureinrichtung (26) zur Abstandskorrektur des Laser-Schneidkopfes (22) zum Werkstück (24) nach einer Heranführung des Laser-Schneidkopfes (22) an die durch die Referenzpositionskoordinaten definierte Referenzposition, **dadurch gekennzeichnet, dass** die Steuereinheit (18) derart ausgebildet und programmiert ist, dass die Steuereinheit (18) Positionskoordinaten des Laser-Schneidkopfes (22) erfasst und ein Vergleich der von der Steuereinheit (18) erfassten Positionskoordinaten nach erfolgter Abstandskorrektur des Laser-Schneidkopfes (22) mit den im Speicher hinterlegten Referenzpositionskoordinaten erfolgt, bevor ein Laser-Schneidprozess eingeleitet wird.

2. Vorrichtung (10) nach Anspruch 1, **dadurch gekennzeichnet, dass** die Steuereinheit (18) derart ausgebildet und programmiert ist, dass nach dem Vergleich ein Abbruchsteuersignal generiert wird, das den Schneidprozess abbricht, wenn die Differenz zwischen wenigstens einer abgespeicherten Referenzpositionskoordinate und der entsprechend erfassten Positionskoordinate einen vorgebbaren Toleranzwert übersteigt.

3. Vorrichtung nach Anspruch 2, **dadurch gekennzeichnet, dass** ein zweiter Roboter (16) zur Positionierung eines Werkstücks (24) vorgesehen ist, durch welchen das Werkstück (24) gegriffen und in wenigstens eine Bearbeitungsposition zum Laser-Schneiden befördert wird, wobei der zweite Roboter (16) derart ausgebildet ist, dass bei einer Beendigung oder dem Abbruch des Laser-Schneidprozesses das Werkstück (24) aus der Bearbeitungsposition in eine weitere Position befördert wird.

4. Verfahren zum Laser-Schneiden eines Werkstücks (24), wobei ein Laser-Schneidkopf (22) von einem über eine elektronische Steuereinheit (18) steuerbaren Roboter (12) an eine vorgebbare Referenzposition in Bezug zu einem Werkstück (24) herangeführt und nach Heranführen des Laser-Schneidkopfes (22) an die vorgegebene Referenzposition mittels einer Abstandskorrektureinrichtung (26) eine Abstandskorrektur des Laser-Schneidkopfes (22) zum Werkstück durchgeführt wird, **dadurch gekennzeichnet, dass** die Steuereinheit (18) Positionskoordinaten des Laser-Schneidkopfes (22) nach erfolgter Abstandskorrektur erfasst und mit den vorgegebenen Referenzpositionskoordinaten vergleicht.

5. Verfahren nach Anspruch 4, **dadurch gekennzeichnet, dass** nach dem Vergleichen ein Abbruchsteuersignal generiert wird, das den Schneidprozess abbricht, wenn die Differenz zwischen wenigstens einer abgespeicherten Referenzpositionskoordinate und der entsprechend erfassten Positionskoordinate einen vorgebbaren Toleranzwert übersteigt.

6. Verfahren nach Anspruch 5, **dadurch gekennzeichnet, dass** das Werkstück (24) für den Laser-Schneidprozess von einem zweiten Roboter (16) zum Positionieren des Werkstücks (24) gegriffen und in wenigstens eine Bearbeitungsposition zum Laser-Schneiden befördert wird und bei einer Beendigung oder dem Abbruch des Laser-Schneidprozesses das Werkstück (24) aus der Bearbeitungsposition in eine weitere Position befördert wird.

7. Verfahren nach Anspruch 6, **dadurch gekennzeichnet, dass** die weitere Position bei Beendigung Laser-Schneidens sich von der weiteren Position bei Abbruch des Laser-Schneidens unterscheidet.

## Claims

1. Device (10) for the laser cutting of a workpiece (24), with an electronically controllable first robot (12) for bringing a laser cutting head (22) to prescribable reference positions with respect to a workpiece (24), a programmable control device (18), provided with a memory, for controlling the first robot (12) with respect to reference position coordinates stored in the memory, and a distance correcting device (26) for correcting the distance of the laser cutting head (22) from the workpiece (24) after the laser cutting head (22) has been brought to the reference position defined by the reference position coordinates, **characterized in that** the control unit (18) is formed and programmed in such a way that the control unit (18) acquires position coordinates of the laser cutting head (22) and a comparison of the position coordinates acquired by the control unit (18) after distance correction of the laser cutting head (22) with the reference position coordinates stored in the memory takes place before a laser cutting process is initiated.

2. Device (10) according to Claim 1, **characterized in that** the control unit (18) is formed and programmed in such a way that an abort control signal, which aborts the cutting process, is generated after the comparison if the difference between at least one stored reference position coordinate and the correspondingly acquired position coordinate exceeds a prescribable tolerance value.

3. Device according to Claim 2, **characterized in that** a second robot (16) is provided for the positioning of a workpiece (24), by which robot (16) the workpiece (24) is gripped and transported into at least one processing position for laser cutting, the second robot (16) being formed in such a way that, when the laser cutting process is completed or aborted, the workpiece (24) is transported from the processing position into a further position.

4. Method for the laser cutting of a workpiece (24), a laser cutting head (22) being brought to a prescribable reference position with respect to a workpiece (24) by a robot (12), which can be controlled by means of an electronic control unit (18), and, after the laser cutting head (22) has been brought to the prescribed reference position, a correction of the distance of the laser cutting head (22) from the workpiece is carried out by means of a distance correcting device (26), **characterized in that** the control unit (18) acquires position coordinates of the laser cutting head (22) after the distance correction and compares them with the prescribed reference position coordinates.

5. Method according to Claim 4, **characterized in that** an abort control signal, which aborts the cutting process if the difference between at least one stored reference position coordinate and the correspondingly acquired position coordinate exceeds a prescribable tolerance value, is generated after the comparison.

6. Method according to Claim 5, **characterized in that** the workpiece (24) for the laser cutting process is gripped by a second robot (16) for positioning the workpiece (24) and is transported into at least one processing position for laser cutting and, when the laser cutting process is completed or aborted, the workpiece (24) is transported from the processing position into a further position.

7. Method according to Claim 6, **characterized in that** the further position when laser cutting is completed differs from the further position when laser cutting is aborted.

## Revendications

1. Dispositif (10) de découpe au laser d'une pièce (24), présentant
un premier robot (12) piloté électroniquement et qui amène une tête (22) de découpe au laser en des positions prédéterminées de référence par rapport à une pièce (24),
une unité de commande (18) dotée d'une mémoire et programmable, qui commande le premier robot (12) par rapport à des coordonnées de position de référence conservées dans la mémoire et
un dispositif (26) de correction de distance qui corrige la distance entre la tête (22) de découpe au laser et la pièce (24) après que la tête (22) de découpe au laser a été amenée dans la position de référence définie par les coordonnées de position de référence,
**caractérisé en ce que**
l'unité de commande (18) est configurée et programmée de telle sorte que l'unité de commande (18) saisit les coordonnées de position de la tête (22) de découpe au laser et effectue une comparaison entre les coordonnées de position détectées par l'unité de commande (18) après que la correction de distance de la tête (22) de découpe au laser a été réalisée et les coordonnées de position de référence conservées dans la mémoire avant de lancer une opération de découpe au laser.

2. Dispositif (10) selon la revendication 1, **caractérisé en ce que** l'unité de commande (18) est configurée et programmée de telle sorte qu'après la comparaison, un signal de commande d'interruption est produit et interrompt l'opération de découpe si la différence entre au moins une coordonnée de position de référence conservée en mémoire et la coordonnée de position saisie qui y correspond dépasse une valeur de tolérance prédéterminée.

3. Dispositif selon la revendication 2, **caractérisé en ce qu'**il présente un deuxième robot (16) qui positionne une pièce (24), saisit la pièce (24) et l'amène en au moins une position d'usinage pour sa découpe au laser, le deuxième robot (16) étant configuré de telle sorte que lorsque l'opération de découpe au laser est terminée ou interrompue, la pièce (24) est transportée depuis la position d'usinage jusque dans une autre position.

4. Procédé de découpe d'une pièce (24) au laser, dans lequel une tête (22) de découpe au laser est amenée par un robot (12) piloté par une unité électronique de commande (18) en une position de référence prédéterminée par rapport à une pièce (24), la distance entre la tête (22) de découpe au laser et la pièce après que la tête (22) de découpe au laser a été amenée dans la position de référence étant corrigée au moyen d'un dispositif (26) de correction de distance, **caractérisé en ce que**
l'unité de commande (18) saisit les coordonnées de position de la tête (22) de découpe au laser lorsqu'une correction de distance a été effectuée et les compare à des coordonnées de position de référence prédéterminées.

5. Procédé selon la revendication 4, **caractérisé en ce qu'**après la comparaison, un signal d'interruption est produit et interrompt l'opération de découpe si la différence entre au moins une coordonnée de position de référence conservée en mémoire et la coordonnée de position saisie qui y correspond dépasse une valeur de tolérance prédéterminée.

6. Procédé selon la revendication 5, **caractérisé en ce que** la pièce (24) est saisie par un deuxième robot (16) qui positionne la pièce (24) pour l'opération de découpe au laser et est transportée dans au moins une position d'usinage pour sa découpe au laser et **en ce que** lorsque l'opération de découpe au laser est terminée ou a été interrompue, la pièce (24) est transportée depuis la position d'usinage jusque dans une autre position.

7. Procédé selon la revendication 6, **caractérisé en ce que** l'autre position lorsque la découpe au laser est terminée est différente de l'autre position lorsque la découpe au laser est interrompue.
